# EUROPÄISCHE PATENTSCHRIFT

(11) **EP 1 157 824 B1**
(45) Veröffentlichungstag und Bekanntmachung des Hinweises auf die Patenterteilung: **23.08.2006**
(21) Anmeldenummer: 01111130.9
(22) Anmeldetag: 09.05.2001
(51) Int. Cl.: B32B 27/08, F16L 59/00, E04B 1/80, B32B 27/16, F16L 59/02

(54) **Folienlaminate als Hochbarrierefolien und deren Verwendung in Vakkuumisolierpaneelen**
Laminated films as high barrier films and their use in vacuum insulation panels
Feuilles laminées telles que des feuilles barrières et leur utilisation dans des panneaux isolants sous vide

(30) Priorität: 22.05.2000 DE 10025321
(43) Veröffentlichungstag der Anmeldung: 28.11.2001
(60) Teilanmeldung: 04022467.7
(73) Patentinhaber: Wipak Walsrode GmbH & Co. KG, 29656 Walsrode (DE)
(72) Erfinder: Jacobsen, Sven, 29683 Fallingbostel (DE); Kuckertz, Christian, Dr., 57462 Olpe (DE); Brandt, Rainer, Dr., 29664 Walsrode (DE)
(74) Vertreter: Kutzenberger, Helga

(56) Entgegenhaltungen:
- DE-U- 29 613 847
- DATABASE WPI Section Ch, Week 199150 Derwent Publications Ltd., London, GB; Class A92, AN 1991-365057 XP002185816 & JP 03 244535 A (HOSOKAWA YOKO KK), 31. Oktober 1991 (1991-10-31)
- DATABASE WPI Section Ch, Week 199125 Derwent Publications Ltd., London, GB; Class A92, AN 1991-181927 XP002185817 & JP 03 110143 A (TOPPAN PRINTING CO LTD), 10. Mai 1991 (1991-05-10) & JP 03 110143 A (TOPPAN PRINTING CO LTD) 10. Mai 1991 (1991-05-10)

## Beschreibung

Die vorliegende Erfindung betrifft Folienlaminate die als Hochbarrierefolien besonders gasdiffusionsdicht sind und die Verwendung dieser gasdiffusionsdichten Folienlaminate in der Herstellung von Vakuum Isolations Paneelen.

In einigen speziellen technischen Produkten wie zum Beispiel in der Herstellung von Vakuum Isolations Paneelen (VIP) sind Folien erforderlich, die äußerst geringe Gasdiffusionswerte besitzen, um dabei im Beispiel der VIP zu garantieren, dass das einmal angelegte Vakuum und damit die Funktionsfähigkeit der VIP über einen sehr langen Zeitraum (10-15 Jahre) erhalten bleiben.

Übliche Sperrschichtfolien aus Kunststoffen, wie beispielsweise EP-A 0 517 026 beschreibt, erreichen nicht die erforderliche Gassperrwirkung. Verbunde die eine Aluminiumfolie enthalten, besitzen zwar eine totale Gassperre, aber sind in vielen Anwendungen bedingt durch die Wärmeleitfähigkeit des Aluminiums nicht erwünscht. Darüber hinaus sind metallisierte oder mit SiOx bedampfte Folien bekannt, die die Nachteile bezüglich der Wärmeleitfähigkeit der reinen Metallfolien umgehen (wie zum Beispiel in EP-A 0 878 298 beschrieben), gleichzeitig höhere Sperrwirkungen als reine Kunststofffolien erzielen, dabei aber ebenfalls weit von den geforderten Gassperrwerten entfernt sind.

Unter Vakuumisolationspaneelen (VIP) versteht man dabei plattenförmige Gebilde, die aus einem Dämm- oder Füllstoff bestehen und von einer Hochbarrierefolie vakuumverpackt umhüllt sind. Die Art und insbesondere die Höhe des Vakuums sind dabei von dem verwendeten Dämm- oder Füllstoff und der verlangten Isolationswirkung des VIP abhängig. Die Hochbarrierefolie verhindert dabei über die Lebensdauer des VIP die Diffusion von Gasen, die das Vakuum und damit die Isolationswerte des VIP verschlechtern. Metallfolien sind dabei als Hochbarrierefolien unerwünscht, da diese über die Kanten des plattenförmigen VIP Wärme leiten und damit die Isolationsleistung verringern.

Aufgabe der vorliegenden Erfindung war es daher, Folienlaminate bereitzustellen, die eine besonders hohe Gassperrwirkung erzielen, ohne dabei wärmeleitende Metallfolien als Komponenten einzusetzen. Dabei sollten gleichzeitig durch geeignete Kombination von Materialien weitere mechanische und thermische Eigenschaften des Folienlaminats positiv beeinflusst werden. Insbesondere sollen Folienlaminate zur Verfügung gestellt werden, die zur Herstellung von Vakuumisolationspaneelen (VIP) geeignet sind.

Erfindungsgemäß gelingt dies durch ein mehrschichtiges Folienlaminat gemäß Anspruch 1.

Folienlaminate mit unterschiedlichem Aufbau waren bereits aus dem Stande der Technik wie z. B. DE-U-296 13 847, JP-A-3244535 bzw. JP-A-3110143 bekannt und wurden zur Herstellung von VIP empfohlen. Eine verbesserte Gassperrwirkung gegenüber der Gesamtwirkung der einzelnen Schichten der bekannten Folienlaminate geht aus dem Stande der Technik aber nicht hervor.

Folgedessen konnte man zunächst nur erwarten, dass die Gassperrwirkung bestenfalls durch die Gassperrwirkung der Einzelfolien gegeben ist, bzw. sich aus der Summation der Sperrwirkungen der Einzelfolien errechnet. Überraschenderweise erhält man jedoch Gassperrwirkungen, die nicht nur deutlich höher als die der Einzelfolien liegen, sondern sogar teils deutlich höher als die der Summe der Einzelfolien liegen. Dies kann zum Beispiel durch eine synergistische Fehlerabdeckungen der einzelnen metallisierten Schichten erklärt werden.

Um noch weiter gesteigerte Gasdiffusionssperrwerte zu erhalten, können zwischen die Schichten (Ia) und (Ib) oder (Ib) und (II) noch weitere Schichten eingefügt werden, die ebenfalls mit Aluminium oder SiOx oder einem Metalloxid der 2. oder 3. Hauptgruppe bedampftes Material enthalten oder aber nicht bedampfte Schichten mit speziellen Barriereeigenschaften (z.B. PVOH).

Die mit Aluminium oder SiOx oder einem Metalloxid der 2. oder 3. Hauptgruppe bedampften Schichten können dabei aus allen üblichen Kunststoffen bestehen, insbesondere aber auch aus Polyestern, Polyamiden, Polyolefinen oder deren Copolymeren. Weiterhin können diese Schichten auch aus coextrudierten Lagen unterschiedlicher Polymere bestehen. Die Dicke der einzelnen Schichten ist dabei nicht wesentlich, wird aber zu einem kleinen Anteil die Gassperrwirkung beeinflussen, zum anderen die mechnischen und thermischen Eigenschaften des Folienlaminats mitbestimmen.

Mit diesen erfindungsgemäßen Folienlaminaten lassen sich insbesondere Sauerstoffdiffusionswerte kleiner 0,01 cm³/m² d bar (23°C, 75% r.h.) und Wasserdampfdiffusionswerte kleiner 0,1 g/m² d (38°C, 90% r.h.) erreichen. Dabei sind mit Laminaten mit mehr als 3 Schichten durchaus auch Folienlaminate zu erhalten, die diese Werte noch deutlich unterschreiten. Durch die Kombination der unterschiedlichen Lagen lassen sich dabei nicht nur die Gasdiffusionswerte auf die von der Anwendung erforderlichen Werte einstellen, darüber hinaus ist es möglich durch Modifikation des Schichtmaterials das mit Aluminium oder SiOx oder einem Metalloxid der 2. oder 3. Hauptgruppe bedampft ist, die mechanischen und/oder thermischen Kennwerte des resultierenden erfindungsgemäßen Laminats zu variieren.

Wird als außenliegende Schicht (Ia) ein mit Aluminium oder SiOx oder einem Metalloxid der 2. oder 3. Hauptgruppe bedampftes Polyamid gewählt, zeichnet sich das entstehende Folienlaminat zusätzlich zu den guten Gasdissusionssperrwerten durch eine hohe mechanische Stabilität, insbesondere durch eine hohe Durchstichfestigkeit aus, die in der Handhabung der erfindungsgemäßen Folienlaminate Vorteile bietet und damit Beschädigungen der Laminate und daraus hergestellter VIP verhindert. Solche VIP müssen sowohl bei der Herstellung als auch beim Einbau in die Endapplikation teilweise große mechanische Belastungen aushalten, die zu einer Beschädigung der Folie und damit der Barriereeigenschaften führen können.

In einem speziellen Fall wird als außenliegende Schicht (Ia) ein mit Aluminium oder SiOx oder einem Metalloxid der 2. oder 3. Hauptgruppe bedampftes Polypropylen gewählt, das sich durch eine besonders gute Wasserdampfsperre auszeichnet. Wird diese außenliegende Schicht nun mit einer Folgeschicht (Ib) kombiniert die aus einem mit Aluminium oder SiOx oder einem Metalloxid der 2. oder 3. Hauptgruppe bedampften Polyester besteht, der sich seinerseits durch eine besonders gute Sauerstoffsperre auszeichnet, wird das daraus gebildete erfindungsgemäße Folienlaminat sich sowohl durch eine bessere Wasserdampfsperre im Vergleich zur einzelnen Polypropylenschicht, als auch durch eine bessere Sauerstoffsperre im Vergleich zur einzelnen Polyesterschicht auszeichnen, womit beide entscheidenden Barriereelemente in besonders überzeugender Weise sich nicht nur ergänzen sondern synergistisch verstärken.

In einem weiteren speziellen Fall ist eine oder mehrere der mit Aluminium oder SiOx oder einem Metalloxid der 2. oder 3. Hauptgruppe bedampften Schichten eine coextrudierte Schicht, in der diese coextrudierte Schicht aus mindestens einer Lage Polyamid (a) und mindestens einer Gasbarrierelage (b) aufgebaut ist. Insbesondere anzustreben ist eine 3-lagige Kombination aus Polyamid in den Außenlagen und EVOH als Gasbarriereschicht in der Innenlage. Die Gasbarrierelage sorgt dabei im resultierenden erfindungsgemäßen Folienlaminat für extrem verbesserte Gassperrwerte, bei der Verwendung von EVOH als Gassperrlage insbesondere zu verbesserten Sauerstoffsperrwerten.

Besonders bevorzugt ist eine Anordnung des Folienlaminats, in dem jeweils 2 der mit Aluminium oder SiOx oder einem Metalloxid der 2. oder 3. Hauptgruppe bedampften Schichten mit den bedampften Seiten gegeneinander laminiert sind. Dies ergibt besonders vorteilhafte Gassperrwerte, da sich hierbei die beiden Metallisierungsschichten direkt ergänzen, sodass mikroskopische Beschädigungen der einen Metallisierung durch die zweite Metallisierung verdeckt werden können, was zu einer überproportionalen Steigerung der Barriereeigenschaften führt.

In einem besonders bevorzugten Aufbau sind eine oder mehrere der Schichten (Ia,Ib,Ic,...) mit Aluminium, vorzugsweise in einer Dicke von 30 bis 80 nm, bedampft.

Als Heißsiegelschicht (II) können Polyolefin Homo- oder Polyolefin Copolymere eingesetzt werden. Bevorzugt sind Linear Low Density Polyethylen (LLDPE), Polybutylen (PB), Ethylenvinylacetat (EVA), Polypropylen (PP), High Density Polyethylen (HDPE), Ionomer (IO) und Mischungen dieser Stoffe, weiterhin denkbar ist amorphes Polyethylenterephthalat (aPET) oder andere siegelfähige Polymermaterialien. Erfindungsgemäß möglich ist auch eine mehrschichtige, durch Coextrusion mehrerer Schichten aus den genannten Materialien hergestellte Ausführungsform der Heißsiegelschicht (II). Die Dicke der Heißsiegelschicht (II) beträgt vorzugsweise 20 bis 200µm, besonders bevorzugt 50 bis 100µm.

Insbesondere kommen bei der Produktion von VIP Ionomersiegelschichten oder andere leichtfließende Siegelschichten zum Einsatz, die unter den typischen staubigen Produktionsbedingungen bei der VIP Herstellung zu besonders gasdichten Siegelnähten führen.

Als Klebe- und Verbindungsschicht zwischen den einzelnen Schichten kommen vorzugsweise handelsübliche Reaktivklebstoffe wie insbesondere Zwei-Komponenten-Polyurethanklebstoffe zum Einsatz. Es können aber auch polyolefinische Haftvermittler, vorzugsweise Polyethylen-Homopolymer, Ethylenethylacrylat (EEA) oder Ethylenmethacrylsäure (EMA) eingesetzt werden. Jedoch ist das erfindungsgemäße Folienlaminat und insbesondere seine Gassperrwirkung nicht wesentlich von der Art der Verbindung der einzelnen Schichten abhängig.

Hierbei ist insbesondere bei den Zwei-Komponenten-Polyurethanklebstoffen darauf zu achten, dass die Komponentenzusammensetzung so gewählt wird, dass eine möglichst geringe Gasbildung stattfindet. Ansonsten kann dies zur Bildung von Gasblasen in den Verbindungsschichten führen.

Ein weiterer Gegenstand der Erfindung ist die Verwendung der erfindungsgemäßen Folienlaminate in Vakuumisolierpaneelen.

Im Folgenden sind beispielhafte Folienaufbauten wiedergegeben, die die erfindungsgemäßen Folienlaminate näher beschreiben sollen. Diese Beispiele sind jedoch nicht vollständig und sollen die erfindungsgemäßen Folienlaminate nicht einschränken.

| | | |
|---|---|---|
| A) | (Ia) | mit Aluminium bedampftes Polyamid, bedampfte Seite zu (Ib) gewandt |
| | (Ib) | mit Aluminium bedampfter Polyester, bedampfte Seite zu (II) gewandt |
| | (II) | Polyethylen-Siegelschicht |
| C) | (Ia) | mit Aluminium bedampftes Polypropylen, bedampfte Seite zu (Ib) gewandt |
| | (Ib) | mit Aluminium bedampfter Polyester, bedampfte Seite zu (II) gewandt |
| | (II) | Polyethylen-Siegelschicht |
| D) | (Ia) | mit Aluminium bedampftes Polyamid, bedampfte Seite zu (Ib) gewandt |
| | (Ib) | mit Aluminium bedampftes Polypropylen, bedampfte Seite zu (Ia) gewandt |
| | (II) | Ionomer-Siegelschicht |
| E) | (Ia) | mit Aluminium bedampftes Coextrudat aus Polyamid/EVOH/Polyamid, bedampfte Seite zu (Ib) |
| | (Ib) | mit Aluminium bedampfter Polyester, bedampfte Seite zu (Ic) gewandt |
| | (Ic) | mit Aluminium bedampfter Polyester, bedampfte Seite zu (Ib) gewandt |
| | (II) | amorphe Polyethylenterephthalat-Siegelschicht |
| F) | (Ia) | mit Aluminium bedampftes Polyamid, bedampfte Seite zu (Ib) gewandt |
| | (Ib) | mit Aluminium bedampfter Polyester, bedampfte Seite zu (Ia) gewandt |
| | (Ic) | mit Aluminium bedampfter Polyester, bedampfte Seite zu (Id) gewandt |
| | (Id) | mit Aluminium bedampfter Polyester, bedampfte Seite zu (Ic) gewandt |
| | (II) | Polypropylen-Siegelschicht |
| G) | (Ia) | mit SiOx bedampftes Polyamid, bedampfte Seite zu (Ib) gewandt |
| | (Ib) | mit SiOx bedampfter Polyester, bedampfte Seite zu (II) gewandt |
| | (II) | Ionomer-Siegelschicht |
| H) | (Ia) | mit SiOx bedampftes Polypropylen, bedampfte Seite zu (Ib) gewandt |
| | (Ib) | mit Aluminium bedampfter Polyester, bedampfte Seite zu (Ia) gewandt |
| | (II) | Polyethylen-Siegelschicht |

## Patentansprüche

1. Mehrschichtiges Folienlaminat umfassend zwei oder mehrere mit Aluminium oder SiOx oder einem Metalloxid der 2. oder 3. Hauptgruppe bedampfte Schichten und eine Heißsiegelschicht (II), **dadurch gekennzeichnet daß** die außen liegende mit Aluminium oder SiOx oder einem Metalloxid der 2. oder 3. Hauptgruppe bedampfte Schicht (Ia) aus Polypropylen, Polyamid oder einer coextrudierten Schicht aus mindestens einer Lage Polyamid und mindestens einer Gasbarrierelage aufgebaut ist.

2. Mehrschichtiges Folienlaminat gemäß Anspruch 1, **dadurch gekennzeichnet, daß** das Laminat mindestens eine mit Aluminium oder SiOx oder einem Metalloxid der 2. oder

3. Hauptgruppe bedampfte coextrudierte Schicht aus mindestens einer Lage Polyamid und mindestens einer Gasbarrierelage aufweist. 3. Mehrschichtiges Folienlaminat gemäß Anspruch 2, **dadurch gekennzeichnet, daß** die coextrudierte Schicht aus Polyamid in den Außenlagen und EVOH als Gasbarriereschicht in der Innenlage besteht.

4. Mehrschichtiges Folienlaminat gemäß einem der Ansprüche 1 bis 3, **dadurch gekennzeichnet, daß** das Laminat insgesamt 3 Schichten umfaßt.

5. Mehrschichtiges Folienlaminat gemäß einem der Ansprüche 1 bis 4, **dadurch gekennzeichnet, daß** jeweils zwei der mit Aluminium oder SiOx oder einem Metalloxid der 2. oder 3. Hauptgruppe bedampften Schichten mit den bedampften Schichten gegeneinander laminiert sind.

6. Mehrschichtiges Folienlaminat gemäß einem der Ansprüche 1 bis 5, **dadurch gekennzeichnet, daß** die bedampften Schichten mit Aluminium, vorzugsweise in einer Dicke von 30 bis 80 nm bedampft sind.

7. Mehrschichtiges Folienlaminat gemäß einem der Ansprüche 1 bis 6, **dadurch gekennzeichnet, daß** die einzelnen Schichten mittels Zwei-Komponenten-PolyurethanKlebstoffen laminiert wurden, wobei insbesondere das Verhältnis der Klebstoffkomponenten so gewählt wurde, daß bei der Klebstoffaushärtung die entstehenden Gasmengen minimiert wurden.

8. Mehrschichtiges Folienlaminat gemäß einem der Ansprüche 1 bis 7, **dadurch gekennzeichnet, daß** die Außenlage (Ia) bedruckt ist.

9. Mehrschichtiges Folienlaminat gemäß einem der Ansprüche 1 bis 8, **dadurch gekennzeichnet, daß** die Heißsiegelschicht aus Olefin-Homo-oder-Copolymeren, oder amorphes Polyethylenterephthalat (aPET) besteht.

10. Mehrschichtiges Folienlaminat gemäß Anspruch 9, **dadurch gekennzeichnet, daß** als Olefin-Homo-oder-Copolymeres Linear Low Density Polyethylen (LLDPE), Polybutylen (PB), Ethylenvinylacetat (EVA), Polypropylen (PP), High Density Polyethylen (HDPE), Ionomer (IO) oder Mischungen dieser Stoffe verwendet wurde.

11. Mehrschichtiges Folienlaminat gemäß Anspruch 9, **dadurch gekennzeichnet, daß** als Heißsiegelschicht (II) eine durch Coextrusion hergestellte mehrschichtige Ausführungsform verwendet wurde.

12. Mehrschichtiges Folienlaminat gemäß Anspruch 1, **dadurch gekennzeichnet, daß** das Laminat folgende Schichtfolge aufweist:
(Ia) mit Aluminium bedampftes Polyamid, bedampfte Seite zu (Ib) gewandt
(Ib) mit Aluminium bedampfter Polyester, bedampfte Seite zu (II) gewandt
(II) Polyethylen-Siegelschicht.

13. Mehrschichtiges Folienlaminat gemäß Anspruch 1, **dadurch gekennzeichnet, daß** das Laminat folgende Schichtfolge aufweist:
(Ia) mit Aluminium bedampftes Polypropylen, bedampfte Seite zu (Ib) gewandt
(Ib) mit Aluminium bedampfter Polyester, bedampfte Seite zu (II) gewandt
(II) Polyethylen-Siegelschicht.

14. Mehrschichtiges Folienlaminat gemäß Anspruch 1, **dadurch gekennzeichnet, daß** das Laminat folgende Schichtfolge aufweist:
(Ia) mit Aluminium bedampftes Polyamid, bedampfte Seite zu (Ib) gewandt
(Ib) mit Aluminium bedampftes Polypropylen, bedampfte Seite zu (Ia) gewandt
(II) Ionomer-Siegelschicht.

15. Mehrschichtiges Folienlaminat gemäß Anspruch 1, **dadurch gekennzeichnet, daß** das Laminat folgende Schichtenfolge aufweist:
(Ia) mit Aluminium bedampftes Polyamid, bedampfte Seite zu (Ib) gewandt
(Ib) mit Aluminium bedampfter Polyester, bedampfte Seite zu (Ia) gewandt
(Ic) mit Aluminium bedampfter Polyester, bedampfte Seite zu (Id) gewandt
(Id) mit Aluminium bedampfter Polyester, bedampfte Seite zu (Ic) gewandt
(II) Polypropylen-Siegelschicht.

16. Mehrschichtiges Folienlaminat gemäß Anspruch 1, **dadurch gekennzeichnet, daß** das Laminat folgende Schichtenfolge aufweist:
(Ia) mit SiOₓ bedampftes Polyamid, bedampfte Seite zu (Ib) gewandt
(Ib) mit SiOₓ bedampfter Polyester, bedampfte Seite zu (II) gewandt
(II) Ionomer-Siegelschicht.

17. Mehrschichtiges Folienlaminat gemäß Anspruch 1, **dadurch gekennzeichnet, daß** das Laminat folgende Schichtenfolge aufweist:
(Ia) mit SiOₓ bedampftes Polypropylen, bedampfte Seite zu (Ib) gewandt
(Ib) mit Aluminium bedampfter Polyester, bedampfte Seite zu (Ia) gewandt
(II) Polyethylen-Siegelschicht.

18. Mehrschichtiges Folienlaminat gemäß Anspruch 1, **dadurch gekennzeichnet, dass** das Laminat folgende Schichtfolge aufweist:
(Ia) mit Aluminium bedampftes Coextrudat aus Polyamid/EVOH/Polyamid, bedampfte Seite zu (Ib) gewandt
(Ib) mit Aluminium bedampfter Polyester, bedampfte Seite zu (Ic) gewandt
(Ic) mit Aluminium bedampfter Polyester, bedampfte Seite zu (Ib) gewandt
(II) amorphe Polyethylenterephthalat-Siegelschicht

19. Verwendung des mehrschichtigen Folienlaminats gemäß einem der Ansprüche 1 bis 18 als Hochbarrierefolie in Vakuumisolationspaneelen.

## Claims

1. Multilayer laminated film encompassing two or more layers which have been aluminium-metallized or have been vapour-coated with SiOₓ or with a metal oxide of the 2nd or 3rd main group, and encompassing a hot-sealable layer (II), **characterized in that** the outer layer (Ia) which has been aluminium-metallized or has been vapour-coated with SiOₓ or with a metal oxide of the 2nd or 3rd main group is composed of polypropylene, of polyamide or of a coextruded layer composed of at least one sublayer of polyamide and of at least one gas-barrier sublayer.

2. Multilayer laminated film according to Claim 1, **characterized in that** the laminated material has at least one coextruded layer which has been aluminium-metallized or has been vapour-coated with SiOₓ or with a metal oxide of the 2nd or 3rd main group and which is composed of at least one sublayer of polyamide and of at least one gas-barrier sublayer.

3. Multilayer laminated film according to Claim 2, **characterized in that** the coextruded layer is composed of polyamide in the external sublayers and EVOH as gas-barrier layer in the inner sublayer.

4. Multilayer laminated film according to any of Claims 1 to 3, **characterized in that** the laminated material encompasses a total of 3 layers.

5. Multilayer laminated film according to any of Claims 1 to 4, **characterized in that** in each case two of the layers which have been aluminium-metallized or have been vapour-coated with SiOₓ or with a metal oxide of the 2nd or 3rd main group have been laminated with the metallized or vapour-coated layers against one another.

6. Multilayer laminated film according to any of Claims 1 to 5, **characterized in that** the metallized or vapour-coated layers have been aluminium-metallized, preferably using a thickness of from 30 to 80 nm.

7. Multilayer laminated film according to any of Claims 1 to 6, **characterized in that** the individual layers have been laminated by means of two-component polyurethane adhesives, the ratio of the adhesive components having in particular been selected in such a way as to minimize the amounts of gas evolved during the hardening of the adhesive.

8. Multilayer laminated film according to any of Claims 1 to 7, **characterized in that** the external sublayer (Ia) has been printed.

9. Multilayer laminated film according to any of Claims 1 to 8, **characterized in that** the hot-sealable layer is composed of olefin homo- or copolymers, or amorphous polyethylene terephthalate (aPET).

10. Multilayer laminated film according to Claim 9, **characterized in that** the olefin homo- or copolymer used comprised linear low-density polyethylene (LLDPE), polybutylene (PB), ethylene-vinyl acetate (EVA), polypropylene (PP), high-density polyethylene (HDPE), ionomer (IO), or a mixture of these substances.

11. Multilayer laminated film according to Claim 9, **characterized in that** the hot-sealable layer (II) used comprised a multilayer embodiment produced via coextrusion.

12. Multilayer laminated film according to Claim 1, **characterized in that** the laminated material has the following sequence of layers:
(Ia) aluminium-metallized polyamide, metallized side facing towards (Ib)
(Ib) aluminium-metallized polyester, metallized side facing towards (II)
(II) sealable polyethylene layer.

13. Multilayer laminated film according to Claim 1, **characterized in that** the laminated material has the following sequence of layers:
(la) aluminium-metallized polypropylene, metallized side facing towards (Ib)
(Ib) aluminium-metallized polyester, metallized side facing towards (II)
(II) sealable polyethylene layer.

14. Multilayer laminated film according to Claim 1, **characterized in that** the laminated material has the following sequence of layers:
(Ia) aluminium-metallized polyamide, metallized side facing towards (Ib)
(Ib) aluminium-metallized polypropylene, metallized side facing towards (Ia)
(II) sealable ionomer layer.

15. Multilayer laminated film according to Claim 1, **characterized in that** the laminated material has the following sequence of layers:
(Ia) aluminium-metallized polyamide, metallized side facing towards (Ib)
(Ib) aluminium-metallized polyester, metallized side facing towards (Ia)
(Ic) aluminium-metallized polyester, metallized side facing towards (Id)
(Id) aluminium-metallized polyester, metallized side facing towards (Ic)
(II) sealable polypropylene layer.

16. Multilayer laminated film according to Claim 1, **characterized in that** the laminated material has the following sequence of layers:
(Ia) SiOₓ-vapour-coated polyamide, vapour-coated side facing towards (Ib)
(Ib) SiOₓ-vapour-coated polyester, vapour-coated side facing towards (II)
(II) sealable ionomer layer.

17. Multilayer laminated film according to Claim 1, **characterized in that** the laminated material has the following sequence of layers:
(Ia) SiOₓ-vapour-coated polypropylene, vapour-coated side facing towards (Ib)
(Ib) aluminium-metallized polyester, metallized side facing towards (Ia)
(II) sealable polyethylene layer.

18. Multilayer laminated film according to Claim 1, **characterized in that** the laminated material has the following sequence of layers:
(Ia) aluminium-metallized coextrudate composed of polyamide/EVOH/polyamide, metallized side facing towards (Ib)
(Ib) aluminium-metallized polyester, metallized side facing towards (Ic)
(Ic) aluminium-metallized polyester, metallized side facing towards (Ib)
(II) sealable amorphous polyethylene terephthalate layer.

19. Use of the multilayer laminated film according to any of Claims 1 to 18 as high-barrier film in vacuum insulation panels.

## Revendications

1. Feuille laminée multicouche comprenant deux couches ou plus de deux couches métallisées à l'aluminium ou au SiOx ou avec un oxyde d'un métal du 2^{e} ou du 3^{e} groupe principal et une couche de thermoscellage (II), **caractérisée en ce que** la couche (Ia) se trouvant à l'extérieur, métallisée à l'aluminium ou au SiOx ou avec un oxyde d'un métal du 2^{e} ou du 3^{e} groupe principal, est constituée de polypropylène, de polyamide ou d'une couche coextrudée composée d'au moins une strate de polyamide et d'au moins une strate faisant barrière aux gaz.

2. Feuille laminée multicouche selon la revendication 1, **caractérisée en ce que** le laminé présente au moins une couche coextrudée, métallisée à l'aluminium ou au SiOx ou avec un oxyde d'un métal du 2^{e} ou 3^{e} groupe principal, composée d'au moins une strate de polyamide et d'au moins une strate faisant barrière aux gaz.

3. Feuille laminée multicouche selon la revendication 2, **caractérisée en ce que** la couche coextrudée est constituée de polyamide dans les strates extérieures et de EVOH comme couche faisant barrière aux gaz dans la strate intérieure.

4. Feuille laminée multicouche selon une des revendications 1 à 3, **caractérisée en ce que** le laminé comprend au total 3 couches.

5. Feuille laminée multicouche selon une des revendications 1 à 4, **caractérisée en ce que** deux des couches métallisées à l'aluminium ou au SiOx ou avec un oxyde d'un métal du 2^{e} ou 3^{e} groupe principal sont chaque fois laminées les unes contre les autres avec les couches métallisées.

6. Feuille laminée multicouche selon une des revendications 1 à 5, **caractérisée en ce que** les couches sont métallisées à l'aluminium, de préférence en une épaisseur de 30 à 80 nm.

7. Feuille laminée multicouche selon une des revendications 1 à 6, **caractérisée en ce que** les couches individuelles ont été laminées au moyen d'adhésifs de polyuréthanne à deux composants, dans laquelle le rapport des composants d'adhésif a été choisi de manière à réduire les quantités de gaz se formant lors du durcissement de l'adhésif.

8. Feuille laminée multicouche selon une des revendications 1 à 7, **caractérisée en ce que** la strate extérieure (Ia) est imprimée.

9. Feuille laminée multicouche selon une des revendications 1 à 8, **caractérisée en ce que** la couche de thermoscellage est constituée d'homopolymères ou de copolymères d'oléfines ou d'un polyéthylène téréphtalate amorphe (aPET).

10. Feuille laminée multicouche selon la revendication 9, **caractérisée en ce qu'**on a utilisé comme homopolymère ou copolymère d'oléfines du polyéthylène linéaire faible densité (LLDPE), du polybutylène (PB), de l'éthylène-acétate de vinyle (EVA), du polypropylène (PP), du polyéthylène haute densité (HDPE), de l'ionomère (IO) ou des mélanges de ces matières.

11. Feuille laminée multicouche selon la revendication 9, **caractérisée en ce qu'**on a utilisé comme couche de thermoscellage (II) une forme de réalisation multicouche produite par coextrusion.

12. Feuille laminée multicouche selon la revendication 1, **caractérisée en ce que** le laminé présente la suite de couches suivante :
(Ia) du polyamide métallisé à l'aluminium, le côté métallisé étant orienté vers (Ib)
(Ib) du polyester métallisé à l'aluminium, le côté métallisé étant orienté vers (II)
(II) une couche de scellage en polyéthylène.

13. Feuille laminée multicouche selon la revendication 1, **caractérisée en ce que** le laminé présente la suite de couches suivante :
(Ia) du polypropylène métallisé à l'aluminium, le côté métallisé étant orienté vers (Ib)
(Ib) du polyester métallisé à l'aluminium, le côté métallisé étant orienté vers (II)
(II) une couche de scellage en polyéthylène.

14. Feuille laminée multicouche selon la revendication 1, **caractérisée en ce que** le laminé présente la suite de couches suivante :
(Ia) du polyamide métallisé à l'aluminium, le côté métallisé étant orienté vers (Ib)
(Ib) du polypropylène métallisé à l'aluminium, le côté métallisé étant orienté vers (Ia)
(II) une couche de scellage en ionomère.

15. Feuille laminée multicouche selon la revendication 1, **caractérisée en ce que** le laminé présente la suite de couches suivante :
(Ia) du polyamide métallisé à l'aluminium, le côté métallisé étant orienté vers (Ib)
(Ib) du polyester métallisé à l'aluminium, le côté métallisé étant orienté vers (Ia)
(Ic) du polyester métallisé à l'aluminium, le côté métallisé étant orienté vers (Id)
(Id) du polyester métallisé à l'aluminium, le côté métallisé étant orienté vers (Ic)
(II) une couche de scellage en polypropylène.

16. Feuille laminée multicouche selon la revendication 1, **caractérisée en ce que** le laminé présente la suite de couches suivante :
(Ia) du polyamide métallisé au SiOₓ, le côté métallisé étant orienté vers (Ib)
(Ib) du polyester métallisé au SiOₓ, le côté métallisé étant orienté vers (II)
(II) une couche de scellage en ionomère.

17. Feuille laminée multicouche selon la revendication 1, **caractérisée en ce que** le laminé présente la suite de couches suivante :
(Ia) du polypropylène métallisé au SiOₓ, le côté métallisé étant orienté vers (Ib)
(Ib) du polyester métallisé à l'aluminium, le côté métallisé étant orienté vers (Ia)
(II) une couche de scellage en polyéthylène.

18. Feuille laminée multicouche selon la revendication 1, **caractérisée en ce que** le laminé présente la suite de couches suivante :
(Ia) un coextrudat en polyamide/EVOH/polyamide métallisé à l'aluminium, le côté métallisé étant orienté vers (Ib)
(Ib) du polyester métallisé à l'aluminium, le côté métallisé étant orienté vers (Ic)
(Ic) du polyester métallisé à l'aluminium, le côté métallisé étant orienté vers (Ib)
(II) une couche de scellage en polyéthylène téréphtalate amorphe.

19. Utilisation de la feuille laminée multicouche selon une des revendications 1 à 18 comme feuille à haute propriété de barrière dans des panneaux isolants sous vide.
